# EUROPÄISCHE PATENTSCHRIFT

(11) **EP 4 264 035 B1**
(45) Veröffentlichungstag und Bekanntmachung des Hinweises auf die Patenterteilung: **20.08.2025**
(21) Anmeldenummer: 21819055.1
(22) Anmeldetag: 18.11.2021
(51) Int. Cl.: F02M 21/02

(54) **GASINJEKTOR MIT REDUZIERTEM VERSCHLEISS**
GAS INJECTOR HAVING REDUCED WEAR
INJECTEUR DE GAZ À USURE RÉDUITE

(30) Priorität: 21.12.2020 DE 102020216404
(43) Veröffentlichungstag der Anmeldung: 25.10.2023
(73) Patentinhaber: Robert Bosch GmbH, 70442 Stuttgart (DE)
(72) Erfinder: MUELLER, Martin, 71696 Moeglingen (DE)
(86) Internationale Anmeldenummer: PCT/EP2021/082055
(87) Internationale Veröffentlichungsnummer: WO 2022/135800

(56) Entgegenhaltungen:
- DE-A1- 102008 041 544
- DE-A1- 102013 222 030
- DE-A1- 19 620 005

## Beschreibung

### Stand der Technik

Die vorliegende Erfindung betrifft einen Gasinjektor zum Einblasen eines gasförmigen Brennstoffs, insbesondere Wasserstoff oder Erdgas oder dergleichen mit einem reduzierten Verschleiß insbesondere für Brennkraftmaschinen. Der Gasinjektor ist insbesondere für eine Direkteinblasung in einen Brennraum einer Brennkraftmaschine ausgelegt.

Gasinjektoren sind aus dem Stand der Technik in unterschiedlichen Ausgestaltungen bekannt. Ein Problemkreis bei Gasinjektoren liegt prinzipbedingt darin, dass aufgrund des gasförmigen, einzublasenden Mediums keine Schmierung durch das Medium möglich ist, wie dies beispielsweise bei Kraftstoffinjektoren, welche Benzin oder Diesel einspritzen, möglich ist. Daraus resultiert im Betrieb ein übermäßiger Verschleiß im Vergleich mit Kraftstoffinjektoren für flüssige Kraftstoffe. Hierbei wäre es wünschenswert, einen Gasinjektor mit einem verbesserten Verschleißverhalten zu haben. Gasinjektoren sind aus DE 10 2008 041544 A1, DE 196 20 005 A1 und DE 10 2013 222030 A1 bekannt.

### Offenbarung der Erfindung

Der erfindungsgemäße Gasinjektor zum Einblasen eines gasförmigen Brennstoffs mit den Merkmalen des Anspruchs 1 weist hiergegen den Vorteil auf, dass ein Verschleiß des Gasinjektors signifikant reduziert werden kann. Dadurch wird eine Lebensdauer des Gasinjektors verlängert und entspricht im Wesentlichen einer Lebensdauer eines Kraftstoffinjektors für flüssige Kraftstoffe. Dies wird erfindungsgemäß dadurch erreicht, dass der Gasinjektor ein in einem abgeschlossenen Schmiermittelraum befindliches Schmiermittel aufweist, in welchem bewegliche Teile des Gasinjektors angeordnet sind. Der Gasinjektor umfasst einen Magnetaktor mit einem Anker, einem Innenpol und einer Spule.

Hierbei ist der Anker, welcher mit einem Schließelement, das einen Gaspfad an einem Ventilsitz freigibt und verschließt, mechanisch verbunden ist, vorgesehen, um eine Bewegung zum Öffnen und/oder Schließen des Injektors zu ermöglichen. Der im Schmiermittelraum befindliche Anker, welcher bei einer Bestromung der Spule gegen den Innenpol des Magnetaktors aufgrund elektromagnetischer Kräfte gezogen wird, befindet sich somit im Inneren des Schmiermittelraums und wird ständig mit Schmiermittel versorgt und geschmiert. Dadurch ist ein Verschleiß am Anker im Vergleich mit den bisher aus dem Stand der Technik bekannten Gasinjektoren signifikant reduziert. Der mit dem Schmiermittel umflossene Anker wird beim Aufschlagen auf den Innenpol in seiner Bewegung gedämpft sodass der Impuls, der vom Anker auf den Innenpol übertragen wird, geringer ist als ohne Schmiermittel. Dieser Injektor ist somit leiser als ein Injektor ohne Schmiermittel. Um eine Abdichtung des Schmiermittelraums sicherzustellen, ist ein erstes und zweites flexibles Dichtelement vorgesehen, welche den Schmiermittelraum an Teilbereichen abdichten. Ferner kann durch Verwendung des abgeschlossenen, mit Schmiermittel gefüllten Schmiermittelraums die Lebensdauer des Gasinjektors signifikant verlängert werden. Vorzugsweise ist der Schmiermittelraum dabei vollständig mit Schmiermittel befüllt.

Somit ist der Schmiermittelraum durch zwei flexible Dichtelemente abgedichtet, wodurch bei einer Verdrängung des Schmierstoffs im Schmierstoffspeicher verhindert werden kann, dass ein ungünstiger Überdruck oder Unterdruck entsteht, welcher z.B. über Bauteile des Schmierstoffspeichers eine ungewollte Kraft auf das Schließelement des Gasinjektors ausüben kann. Durch das Vorsehen von zwei flexiblen Dichtelementen kann selbst dann, wenn eine ungünstige Kraft auf eines der Dichtelemente ausgeübt wird, was zu einem Druckanstieg oder Druckabfall im abgeschlossenen Schmiermittelraum führen könnte, die Druckänderung durch das zweite flexible Dichtelement ausgeglichen werden. Somit kann erfolgreich ein unerwünschter Druckabfall oder Druckanstieg im Inneren des abgeschlossenen Schmiermittelraums verhindert werden.

Die Unteransprüche zeigen bevorzugte Weiterbildungen der Erfindung.

Weiter bevorzugt umfasst der Gasinjektor ferner eine Speicherfeder, welche von außen eine vorbestimmte Kraft auf das Schmiermittel im abgeschlossenen Schmiermittelraum ausübt. Vorzugsweise wird hierbei ein Überdruck zwischen 0,5 bis 10 x 10⁵ Pa ausgeübt, besonders bevorzugt 1 bis 5 x 10⁵ Pa. Somit kann das Schmiermittel im Schmiermittelraum unter eine vorbestimmte Vorspannung gebracht werden, wodurch unerwünschte Deformierungen, welche Auswirkungen auf einen Hub des Schließelements haben könnten, sicher verhindert werden können.

Besonders bevorzugt ist das erste flexible Dichtelement ein erster Faltenbalg und das zweite flexible Dichtelement ein zweiter Faltenbalg. Weiter bevorzugt sind der erste und zweite Faltenbalg identisch ausgebildet, d.h., weisen einen gleichen mittleren Balgdurchmesser auf, sowie eine gleiche Anzahl von Balgwellen. Dadurch können insbesondere die Herstellkosten des Gasinjektors reduziert werden.

Der zweite Faltenbalg ist weiter bevorzugt über einen Teller mit einem Führungszapfen mit der Speicherfeder verbunden. Hierdurch kann ein einfacher und kostengünstiger Aufbau realisiert werden. Weiterhin kann dadurch direkt auf den zweiten Faltenbalg mittels der Speicherfeder eine gewisse Vorspannung ausgeübt werden, wodurch der Überdruck im Speicherraum erzeugt wird.

Gemäß einer weiteren bevorzugten Ausgestaltung der Erfindung umfasst der Gasinjektor ferner eine erste und eine zweite Schließelementführung. Die erste und zweite Schließelementführung sind dabei vorzugsweise beide im Speicherraum angeordnet. Das Schließelement weist vorzugsweise nur die beiden ersten und zweiten Schließelementführungen auf, so dass alle Führungselemente für das Schließelement im Inneren des mit Schmiermittel gefüllten Schmiermittelraums angeordnet sind. Dadurch ist eine Schmierung aller wichtigen Bauteile des Gasinjektors im Inneren des Schmiermittelraums sichergestellt. Dadurch kann eine Lebensdauer des Gasinjektors in Praxis der eines Injektors für flüssige Kraftstoffe entsprechen.

Gemäß einer weiteren bevorzugten Ausgestaltung der Erfindung ist die Speicherfeder innerhalb des zweiten Faltenbalgs angeordnet. Der Schmiermittelraum dehnt sich somit radial außerhalb des zweiten Faltenbalgs aus und wird durch ein Gehäusebauteil begrenzt. Dadurch kann ein insbesondere in Axialrichtung des Gasinjektors kompakterer Aufbau erreicht werden, da die Speicherfeder im Inneren des zweiten Faltenbalgs angeordnet ist.

Weiter bevorzugt ist im Schmiermittelraum eine Bremseinrichtung angeordnet, welche eingerichtet ist, um das Schließelement bei einem Rückstellvorgang des Schließelements abzubremsen. Hierdurch kann ein Verschleiß am Ventilsitz reduziert werden, da durch das Abbremsen des Schließelements beim Rückstellvorgang ein Anschlagen des Schließelements an den Ventilkörpersitz reduziert werden kann. Die Bremseinrichtung kann den Impuls beim Auftreffen des Schließelements auf den Ventilkörper reduzieren, insbesondere da der Ventilsitz üblicherweise sehr trocken ist und in der heißen Brennraumatmosphäre sitzt.

Die Bremseinrichtung umfasst vorzugsweise einen Bremsbolzen und ein elastisches Bremselement, beispielsweise eine Feder oder ein elastisches Bauteil. Der Bremsbolzen ist beim Rückstellvorgang in Wirkverbindung mit dem Anker und/oder dem Schließelement bringbar, sodass der Anker vor seinem eigentlichen Anschlagen am Anschlag auf den Bremsbolzen trifft und diesen gegen die Kraft des elastischen Elements bewegt, wodurch eine Dämpfung des Ankers beim Rückstellvorgang möglich ist. Insbesondere wird eine Rückstellgeschwindigkeit des Ankers reduziert. Dies wird zusätzlich noch durch die mit der Bremseinrichtung bereitgestellten Beschleunigung der zusätzlichen Massen unterstützt. Weiterhin wird über die Verdrängung des Schmierstoffs zwischen dem Anker und dem Bremsbolzen eine weitere Abbremsung realisiert. Auch kann durch Reibung von Führungselementen oder dergleichen mit dem Bremsbolzen eine Rückstellgeschwindigkeit des Schließelements weiter reduziert werden. Dies alles reduziert die Aufschlagkraft des Ankers am Anschlag, sodass eine Lebensdauer des Ankers weiter verlängert werden kann.

Besonders bevorzugt ist am Bremsbolzen ein Bremsführungselement angeordnet, welches eine stabile Bewegung des Führungsbolzens sicherstellt. Ferner kann durch das Bremsführungselement zusätzlich noch Reibung beim Rückstellvorgang des Schließelements erzeugt werden, welche zusätzlich eine Dämpfungsfunktion bereitstellt.

Vorzugsweise ist im geschlossenen Zustand des Injektors ein Axialspalt B zwischen dem Bremsführungselement und dem Bremsbolzen kleiner als ein Axialspalt C zwischen dem Anker und dem Innenpol. Der Axialspalt B zwischen dem Bremsführungselement und dem Bremsbolzen liegt dabei in einem Bereich von 1 % bis 90 % des Axialspalts C zwischen Anker und Innenpol. Besonders bevorzugt ist der Axialspalt B zwischen Bremsführungselement und Bremsbolzen dabei kleiner als 25 % des Axialspalts C, weiter bevorzugt in einem Bereich von 3 % bis 10 % des Axialspalts C. Der Axialspalt C weist vorzugsweise eine Größe von 0,05 mm bis 3 mm, insbesondere 0,8 mm auf.

Vorzugsweise wird als Schmiermittel ein Öl, insbesondere Mineralöl, synthetisches Kohlenwasserstofföl, Esteröl oder Polyglykolöl, verwendet. Alternativ wird ein flüssiger Kraftstoff, insbesondere Diesel oder Benzin verwendet. Weiter alternativ wird als Schmiermittel ein Fett verwendet.

Weiter bevorzugt ist das erste und zweite flexible Dichtelement jeweils ein einlagiger oder mehrlagiger Faltenbalg. Der Faltenbalg ist vorzugsweise aus Metall oder alternativ aus einem Kunststoff. Der erste Faltenbalg ist vorzugsweise mit einem ersten Ende direkt am Schließelement fixiert und mit einem anderen Ende an einem Gehäusebauteil des Gasinjektors fixiert. Die Fixierung kann beispielweise bei Metallbälgen mittels einer Schweißnaht erfolgen.

Alternativ ist das erste und zweite flexible Dichtelement jeweils eine Membran oder jeweils ein Gummielement. Die Membran kann einlagig oder mehrlagig sein und beispielsweise mittels Laserschweißen an den jeweiligen Bauteilen zur Abdichtung des Schmiermittelraums fixiert sein.

Vorzugsweise ist ein Gaspfad des gasförmigen Brennstoffs in einem Bereich zwischen einem Ventilgehäuse des Gasinjektors und einem Aktorgehäuse des Gasinjektors vorgesehen. Dadurch kann der Aktor in einem Gehäuse angeordnet werden und zumindest teilweise als Baugruppe vormontiert werden. Dadurch kann auch auf relativ einfache Weise der Schmiermittelraum im Inneren des Aktorgehäuses angeordnet werden.

Alternativ ist der Gaspfad des gasförmigen Brennstoffs durch einen Bereich des Magnetaktors, insbesondere durch den Spulenraum, in welchem die Spule des Magnetaktors angeordnet ist, ausgebildet. Dadurch kann ein separates Aktorgehäuse für den Magnetaktor entfallen. Besonders bevorzugt ist dann eine elektrische Kontaktierung durch den Gaspfad des gasförmigen Brennstoffs geführt. Dadurch kann insbesondere eine Komplexität des Aufbaus des Gasinjektors reduziert werden. Es sei angemerkt, dass die elektrische Kontaktierung, welche durch den Gasraum führt, nach außen hin selbstverständlich abgedichtet werden muss.

Weiter bevorzugt ist im Gaspfad für den gasförmigen Brennstoff ein Filter angeordnet, um gegebenenfalls im gasförmigen Brennstoff vorhandene Feststoffpartikel herauszufiltern oder um herstellbedingte oder montagebedingte Feststoffpartikel herauszufiltern. Weiter bevorzugt ist am Schließelement auch ein Führungsbauteil vorgesehen, insbesondere, wenn das Schließelement eine lange Ventilnadel ist.

Der Gasinjektor ist vorzugsweise ein nach außen öffnender Injektor. Weiter bevorzugt ist der Gasinjektor druckkraftausgeglichen. Dadurch ist die Kraft zum Öffnen des Gasinjektors durch den Magnetaktor unabhängig vom Gasdruck. Die Zeit zum Öffnen und Schließen des Injektors nach Bestromungsbeginn bzw. Bestromungsende ist somit auch unabhängig vom Gasdruck. Dieses wiederum erlaubt einen Betrieb bei verschiedenen Gasdrücken. Bei gewünscht kleiner Einblasmenge kann der Gasdruck reduziert werden und bei gewünscht großer Einblasmenge kann der Gasdruck angehoben werden. Der Injektor ist druckkraftausgeglichen, wenn der mittlere Durchmesser des Balgs gleich dem Durchmesser der Sitzberührlinie zwischen Schließelement und Ventilkörper ist. Der mittlere Balgdurchmesser kann aber auch kleiner oder größer als der Sitzdurchmesser ausgeführt sein. Im ersten Fall reduziert sich bei einem höheren Gasdruck die gesamte Schließkraft auf die Ventilnadel und der Injektor öffnet bei Bestromung schneller und schließt langsamer nach der Bestromung. Das ergibt eine erhöhte Gaseinblasmenge. Im zweiten Fall erhöht sich bei einem höheren Gasdruck die Schließkraft auf die Ventilnadel. Das wiederum kann eine Erhöhung der Sitzleckagemenge durch den höheren Gasdruck kompensieren.

Eine Rückstellung erfolgt vorzugsweise mittels einer Rückstellfeder. Bei einem druckkraftausgeglichenen Injektor liegt insbesondere keine, in Öffnungsrichtung wirkende Druckkraft auf die Ventilnadel durch den gasförmigen Brennstoff im geschlossenen Zustand des Gasinjektors vor, sodass eine Belastung des Schließelements signifikant reduziert werden kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Schnittansicht eines Gasinjektors gemäß einem ersten Ausführungsbeispiel der Erfindung,
- Figur 2: eine schematische Schnittansicht eines Gasinjektors gemäß einem zweiten Ausführungsbeispiel der Erfindung, und
- Figur 3: eine weitere schematische, vergrößerte Teilschnittansicht eines Gasinjektors gemäß einem dritten Ausführungsbeispiel der Erfindung.

### Bevorzugte Ausführungsformen der Erfindung

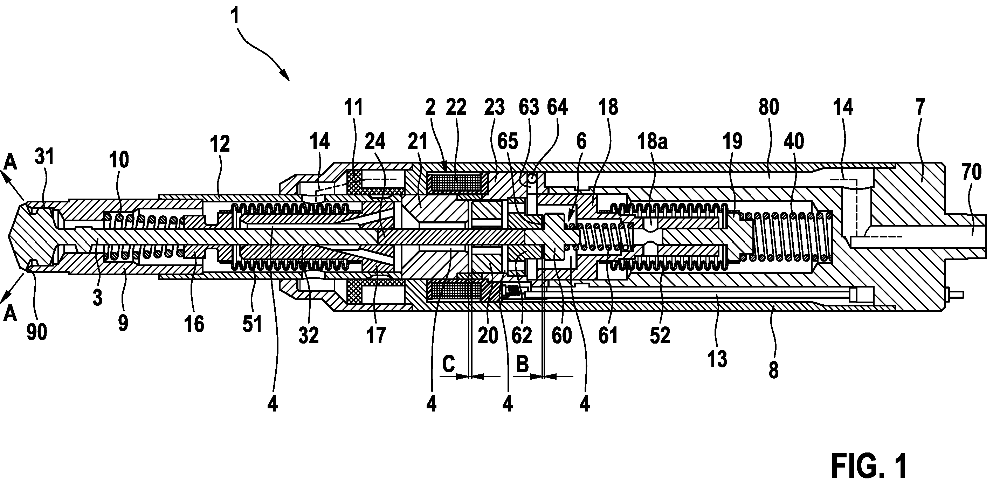

Nachfolgend wird unter Bezugnahme auf Figur 1 ein Gasinjektor 1 gemäß einem ersten bevorzugten Ausführungsbeispiel der Erfindung im Detail beschrieben.

Wie aus Figur 1 ersichtlich ist, umfasst der Gasinjektor 1 zum Einbringen eines gasförmigen Brennstoffs einen Magnetaktor 2, welcher ein Schließelement 3 in diesem Ausführungsbeispiel eine nach außen öffnende Ventilnadel, von einem geschlossenen Zustand in einen geöffneten Zustand bewegt. Die Figur 1 zeigt dabei den geschlossenen Zustand des Gasinjektors.

Der Magnetaktor 2 umfasst einen Anker 20, welcher mittels eines Ankerbolzens 24 am Schließelement 3 anliegt. Ferner umfasst der Magnetaktor 2 einen Innenpol 21, eine Spule 22 und ein Magnetgehäuse 23, welches einen magnetischen Rückschluss des Magnetaktors sicherstellt.

Weiterhin umfasst der Gasinjektor 1 einen Hauptkörper 7 mit einem Anschlussrohr 70, durch welches der gasförmige Brennstoff zugeführt wird. Am Hauptkörper 7 ist dabei ein Ventilgehäuse 8 fixiert, in welchem der Magnetaktor 2 angeordnet ist. An das Ventilgehäuse 8 schließt sich ein Ventilkörper 9 an, an dessen freiem Ende ein Ventilsitz 90 vorgesehen ist, in welchem das Schließelement 3 einen Durchlass für den gasförmigen Brennstoff freigibt und verschließt.

In Figur 1 ist schematisch ein elektrischer Anschluss 13, welcher durch den Hauptkörper 7 bis zum Magnetaktor 2 geführt ist, dargestellt.

Ein Haltekörper 12 ist vorgesehen, um den Innenpol 21 am Ventilkörper 9 zu fixieren.

Das Bezugszeichen 10 bezeichnet ein Rückstelleelement für das Schließelement 3, um dieses nach einem Öffnungsvorgang wieder in den in Figur 1 gezeigten geschlossenen Zustand zurückzustellen.

In Figur 1 ist ferner eine Gasströmung als Gaspfad 14 durch den Gasinjektor 1 dargestellt. Die Gasströmung beginnt dabei am Anschlussrohr und wird dann um 90° umgeleitet in einen Ringraum 80 zwischen dem Ventilgehäuse 8 und dem Hauptkörper 7. Die Gasströmung 14 geht dabei weiter an einem Außenbereich des Magnetaktors 2 vorbei durch einen Filter 11 in dem Bereich am Schließelement 3 bis vor zum Ventilsitz 90. Hierbei sind entsprechend Durchbrüche in den jeweiligen Bauteilen vorgesehen, welche in den Figuren nicht gezeigt sind.

Beim Öffnen des Gasinjektors 1 strömt dann der gasförmige Brennstoff am Außenumfang des Magnetaktors 2 und am geöffneten Dichtsitz 90 vorbei in einen Brennraum einer Brennkraftmaschine, was in Figur 1 durch den Pfeil A angedeutet ist.

Das Schließelement 3 gibt somit einen Gaspfad am Ventilsitz 90 frei und verschließt diesen. Zur Führung sind ein erster Führungsbereich 31 am Ventilkörper 9 und ein zweiter Führungsbereich 32 zwischen dem Schließelement 3 und einer Ventilnadelführung 17 vorgesehen, wie im Detail aus Figur 1 ersichtlich ist.

Ferner umfasst der Gasinjektor 1 einen abgeschlossenen Schmiermittelraum 4. Der abgeschlossene Schmiermittelraum 4 ist vollständig oder teilweise mit einem Schmierstoff gefüllt, z.B. Öl. Dabei ist der zweite Führungsbereich 32 innerhalb des Schmiermittelraums 4 angeordnet.

Wie aus Figur 1 ersichtlich ist, wird der Schmiermittelraum 4 durch ein erstes flexibles Dichtelement 51, die Ventilnadelführung 17, den Innenpol 21, ein Magnetgehäuse 23, einen Speicherkörper 18 und ein zweites flexibles Dichtelement 52 definiert. Das erste und zweite flexible Dichtelement 51, 52 ist jeweils als Faltenbalg ausgebildet. Das erste und zweite flexible Dichtelement 51, 52 ist dabei gleich ausgebildet.

Wie weiter aus Figur 1 ersichtlich ist, ist das zweite flexible Dichtelement 52 an einem Teller 19 mit Führungszapfen, beispielsweise mittels einer Schweißverbindung fixiert. Ferner umfasst der Gasinjektor 1 eine Speicherfeder 40, welche sich am Hauptkörper 7 abstützt und das zweite flexible Dichtelement 52 über den Teller 19 vorspannt. Im Speicherkörper 18 sind Querbohrungen 18a vorgesehen, so dass das sich im Schmiermittelraum 4 befindliche Schmiermittel auch in dem Bereich innerhalb des zweiten flexiblen Dichtelements 52 befindet.

Das erste flexible Dichtelement 51 ist an einem mit dem Schließelement 3 verbundenen Federteller 16 fixiert und am anderen Ende mit der Ventilnadelführung 17 verbunden. Das Rückstellelement 10 stützt sich dabei am Federteller 16 ab, welches fest mit dem Schließelement 3 verbunden ist.

Somit weist der Schmiermittelraum 4 zwei flexible Dichtelemente 51, 52 sowie die Speicherfeder 40 auf. Die Speicherfeder 40 übt eine gewisse Vorspannung, beispielsweise 1 x 10⁵ Pa, auf das sich im Schmiermittelraum 4 befindliche Schmiermittel auf. Wenn nun bei einem Öffnungsvorgang nach links eine Verdrängung des Schmiermittels durch den Hub des Schließelements 3 oder auch durch Kälteschrumpfung oder Wärmeausdehnung des Schmiermittels auftritt, kann ein gegebenenfalls im Inneren des Schmiermittelraums 4 entstehender Unterdruck bzw. Überdruck durch Auslenkung am zweiten flexiblen Dichtelement 52 in Verbindung mit einer Ausdehnung bzw. Kontraktion der Speicherfeder 40 ausgeglichen werden. Somit kann eine durch das flexible Dichtelement 51 ungewollte, über die Balgwirkfläche wirkende Kraft auf das Schließelement 3 vermieden werden.

Im abgeschlossenen Schmiermittelraum 4 ist der Ankerbolzen 24 mit dem daran fixierten Anker 20 angeordnet. Da der Schmiermittelraum 4 mit einem Schmiermittel, beispielsweise einem flüssigen Kraftstoff wie Benzin oder Diesel oder einem Fett oder dergleichen gefüllt ist, ist eine kontinuierliche Schmierung des Ankers 20 gegeben. Dadurch kann das im Stand der Technik auftretende Problem bei gasförmigen Brennstoffen, dass eine fehlende Schmierung der bewegten Teile fehlt, kompensiert werden.

Wie aus Figur 1 ersichtlich ist, ist zum Befüllen des abgeschlossenen Schmiermittelraums 4 ein Füllkanal 63 vorgesehen. Der Füllkanal 63 ist mittels einer Verschlusskugel 64 fluiddicht verschlossen.

Im abgeschlossenen Schmiermittelraum 4 ist ferner eine Bremseinrichtung 6 angeordnet. Die Bremseinrichtung 6 umfasst einen Bremsbolzen 60, eine Bremsfeder 61 und ein Bremsführungselement 62. Das Bremsführungselement 62 dient zum Führen des Bremsbolzens 60 und ist an einem Innenumfang des Magnetgehäuses 23 angeordnet.

Der Bremsbolzen 60 ist dabei über den Ankerbolzen 24 mit dem Anker in Wirkverbindung. Die Bremsfeder 61 ist zwischen dem Bremsbolzen 60 und dem Speicherkörper 18 angeordnet.

Die Bremseinrichtung 6 hat dabei die Aufgabe, bei einem Schließvorgang des Gasinjektors 1 das Schließelement 3 samt dem Anker 20 abzubremsen. Die Abbremsung erfolgt dabei einerseits über die Bremsfederkraft durch die Bremsfeder 61 am Bremsbolzen 60 sowie ein hydraulisches Kleben an einer axialen Anlagefläche 65 zwischen dem Bremsbolzen 60 und dem feststehenden Bremsführungselement 62 (vgl. Figur 1) beim Abheben des Bremsbolzens 60 von der axialen Anlagefläche 65.

Zusätzlich wird beim Rückstellen des Schließelements 3 dieses durch die Reibung in dem Bremsführungselement 62, in welches auch der Ankerbolzen 24 teilweise vorsteht, abgebremst. Weiterhin führen die zu beschleunigten Massen und die Verdrängung des Schmierstoffs im abgeschlossenen Schmiermittelraum 4 zu einer zusätzlichen Abbremsung beim Schließvorgang.

Wie aus Figur 1 ersichtlich ist, ist im geschlossenen Zustand zwischen dem Anker 20 und dem Innenpol 21 ein Axialspalt C vorgesehen. Zwischen dem Bremsbolzen 60 und dem Bremsführungselement 62 ist ein Axialspalt B vorgesehen. Der Axialspalt C zwischen dem Anker 20 und Innenpol 21 ist vorzugsweise in einem Bereich von 0,05 bis 3 mm und beträgt besonders bevorzugt 0,3 mm bis 1 mm. Bei einer Bestromung der Spule 22 wird der Anker 20 dann gegen den Innenpol 21 gezogen, wodurch über den Ankerbolzen 24 das Schließelement 3 in den Öffnungszustand gebracht, sodass gasförmiger Brennstoff in den Brennraum ausströmen kann. Es sei angemerkt, dass zur Reduzierung von magnetischen Streuflüssen insbesondere der Ankerbolzen 24 und/oder die hülsenförmige Ventilnadelführung 17 aus nicht magnetisierbaren Materialien ausgeführt sind.

Der Axialspalt B zwischen dem Bremsbolzen 60 und dem Bremsführungselement 62 ist dabei kleiner als der Spalt C zwischen dem Anker 20 und dem Innenpol 21 und wird beim Öffnungsvorgang durch die Federkraft der Bremsfeder 61 ebenfalls geschlossen. Vorzugsweise ist der Spalt B 1 % bis 90 % des Spaltes C. Dadurch wird beim Rückstellvorgang das hydraulische Kleben des Bremsbolzens 60 am Bremsführungselement 62 realisiert.

Der in Figur 1 gezeigte Gasinjektor 1 ist dabei druckkraftausgeglichen. Das heißt, das Schließelement 3 ist über den Federteller 16 mit dem ersten flexiblen Dichtelement 51 verbunden, wobei das als Metallbalg ausgeführte erste flexible Dichtelement 51 einen mittleren Durchmesser aufweist, welcher gleich einem Durchmesser am Ventilsitz 90 ist, an welchem das Schließelement 3 am Ventilkörper 9 abdichtet. Dadurch ergibt sich keine Druckkraft auf das Schließelement 3, sodass eine magnetische Kraft, welche zum Öffnen des Schließelements 3 notwendig ist, sehr klein gehalten werden kann und insbesondere unabhängig von einem Druck des gasförmigen Brennstoffs ist.

Es sei angemerkt, dass als flexible Dichtelemente 51, 52 anstatt des Balges auch beispielsweise eine Membran oder ein Schlauch oder ein Gummielement oder dergleichen sein kann.

Somit kann der Gasinjektor 1 einen reduzierten Verschleiß an den bewegten Teilen, insbesondere am Ventilsitz 90, Anker 20 und im Ankerbolzen 24, bereitstellen. Weiterhin kann durch den abgeschlossenen Schmiermittelraum 4 mit einem flüssigen Schmiermittel eine Wärmeableitung aus dem Magnetaktor 2 deutlich verbessert werden. Ferner kann durch die beiden flexiblen Dichtelemente 51, 52 verhindert werden, dass ungewollte Kräfte auf das Schließelement 3 wirken.

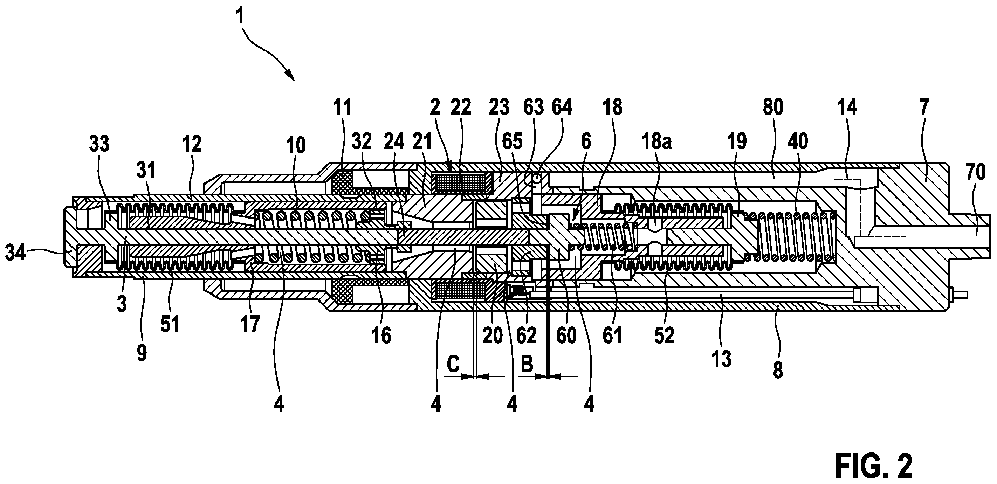

Figur 2 zeigt einen Gasinjektor 1 gemäß einem zweiten Ausführungsbeispiel der Erfindung. Gleiche bzw. funktional gleiche Teile sind wie im ersten Ausführungsbeispiel bezeichnet.

Wie aus Figur 2 ersichtlich ist, ist der Aufbau des Gasinjektors 1 grundsätzlich gleich wie der des ersten Ausführungsbeispiels. Im Unterschied dazu ist der Schmiermittelraum 4 beim zweiten Ausführungsbeispiel jedoch unterschiedlich vorgesehen. Wie aus Figur 2 ersichtlich ist, ist der erste Führungsbereich 31 und der zweite Führungsbereich 32 im Inneren des Schmiermittelraums 4 befindlich. Der erste Führungsbereich 31 ist an einer Ventilnadelführung angeordnet und der zweite Führungsbereich 32 ist am Federteller 16 angeordnet. Dadurch kann auch eine Schmierung beider Führungsbereiche 31, 32 durch das Schmiermittel, welches sich im Schmiermittelraum 4 befindet, ermöglicht werden. Weiterhin weist das Schließelement 3 einen Ringflansch 33 auf, an welchem das erste flexible Dichtelement 51 fixiert ist. Am anderen Ende ist das erste flexible Dichtelement 51 an der Ventilnadelführung 17 fixiert. Wie aus Figur 2 ersichtlich ist, ist auch das Rückstellelement 10 im Schmiermittelraum 4 angeordnet und stützt sich an der Ventilnadelführung 17 ab. Somit sind beim zweiten Ausführungsbeispiel noch mehr bewegte Teile innerhalb des Schmiermittelraums 4 angeordnet, so dass ein Verschleiß des Gasinjektors des zweiten Ausführungsbeispiels weiter gesenkt werden kann.

Ansonsten entspricht dieses Ausführungsbeispiel dem ersten Ausführungsbeispiel, sodass auf die dort gegebene Beschreibung verwiesen werden kann.

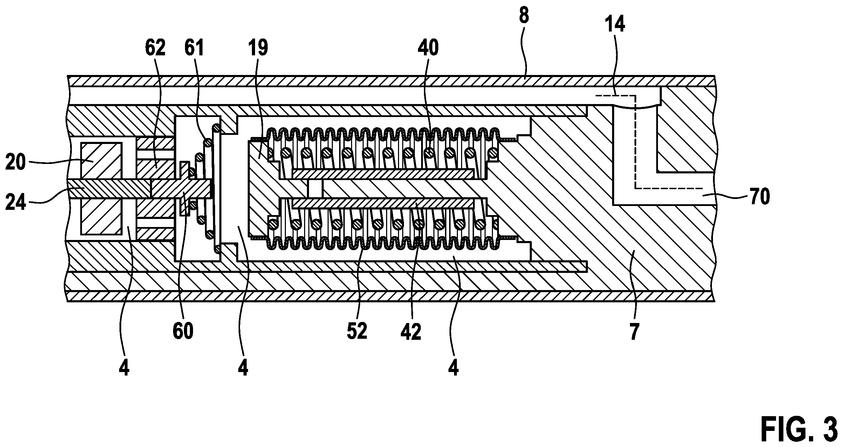

Figur 3 zeigt Details eines Gasinjektors 1 gemäß einem dritten Ausführungsbeispiel, wobei wiederum gleiche bzw. funktional gleiche Teile mit den gleichen Bezugszeichen wie in den vorhergehenden Ausführungsbeispielen bezeichnet sind. Das dritte Ausführungsbeispiel kann mit dem ersten Ausführungsbeispiel oder dem zweiten Ausführungsbeispiel kombiniert werden. Wie aus Figur 3 ersichtlich ist, ist das dritte Ausführungsbeispiel im Bereich des zweiten flexiblen Dichtelements 52 geändert. Wie aus Figur 3 ersichtlich ist, ist die Speicherfeder 40 im Inneren des als Faltenbalg ausgebildeten zweiten flexiblen Dichtelements 52 angeordnet. Das Schmiermittel befindet sich dabei radial außerhalb des zweiten flexiblen Dichtelements 52. Die Speicherfeder 40 stützt sich dabei an dem Federteller 19, welcher den Schmiermittelraum 4 mitbegrenzt, und dem Hauptkörper 7 ab. Zur Führung des Federtellers 19 ist eine Hülse 42 vorgesehen. Somit kann eine axiale Baulänge des Gasinjektors 1 durch die Positionierung der Speicherfeder 40 im Inneren des zweiten flexiblen Dichtelements 52 reduziert werden. Ein weiterer Unterschied beim dritten Ausführungsbeispiel liegt darin, dass die Bremsfeder 61 des dritten Ausführungsbeispiels eine kegelförmige Schraubendruckfeder ist. Hierdurch kann die axiale Baulänge des Gasinjektors 1 weiter reduziert werden.

Ansonsten entspricht das dritte Ausführungsbeispiel dem ersten bzw. zweiten Ausführungsbeispiel, so dass auf die dort gegebene Beschreibung verwiesen werden kann.

## Patentansprüche

1. Gasinjektor zum Einblasen eines gasförmigen Brennstoffs, umfassend: - einen Magnetaktor (2) mit einem Anker (20), einem Innenpol (21) und einer Spule (22), - ein Schließelement (3), welches einen Gaspfad (14) an einem Ventilsitz (90) freigibt und verschließt, wobei der Anker (20) mit dem Schließelement (3) verbunden ist, - einen abgeschlossenen Schmiermittelraum (4), der mit einem Schmiermittel gefüllt ist und in welchem der Anker (20) angeordnet ist, wobei das Schmiermittel eine Schmierung des Ankers (20) sicherstellt und - ein erstes flexibles Dichtelement (51) und ein zweites flexibles Dichtelement (52), welche den Schmiermittelraum (4) gegenüber dem Gaspfad (14) abdichten, **dadurch gekennzeichnet, dass** der Gaspfad (14) an einem Anschlussrohr (70) beginnt und dann in einen Ringraum (80) zwischen einem Ventilgehäuse (8) und einem Hauptkörper (7) umgeleitet wird und weiter an einem Außenbereich des Magnetaktors (2) vorbei bis vor zum Ventilsitz (90) geht, so dass der Gaspfad (14) jeweils radial außen gegenüber dem ersten flexiblen Dichtelement (51) und dem zweiten flexiblen Dichtelement (52) verläuft.

2. Gasinjektor nach Anspruch 1, ferner umfassend eine Speicherfeder (40), welche von außen eine vorbestimmte Kraft auf das Schmiermittel im abgeschlossenen Schmiermittelraum (4) ausübt.

3. Gasinjektor nach einem der vorhergehenden Ansprüche, wobei das erste flexible Dichtelement (51) ein erster Faltenbalg ist und wobei das zweite flexible Dichtelement (52) ein zweiter Faltenbalg ist.

4. Gasinjektor nach Anspruch 3, wobei der zweite Faltenbalg über einen Teller (19) mit der Speicherfeder (40) verbunden ist.

5. Gasinjektor nach Anspruch 3 oder 4, wobei der erste Faltenbalg einen gleichen mittleren Durchmesser wie der zweite Faltenbalg und eine gleiche Anzahl von Balgwellen aufweist.

6. Gasinjektor nach einem der vorhergehenden Ansprüche, ferner umfassend wenigstens zwei Führungsbereiche (31, 32) zur Führung des Schließelements (3), welche beide im Schmiermittelraum (4) angeordnet sind.

7. Gasinjektor nach einem der Ansprüche 3 bis 6, wobei die Speicherfeder (40) innerhalb des zweiten flexiblen Dichtelements (52) angeordnet ist und der Schmiermittelraum sich außerhalb des zweiten flexiblen Dichtelements (52) befindet.

8. Gasinjektor nach einem der vorhergehenden Ansprüche, wobei im Schmiermittelraum (4) eine Bremseinrichtung (6) angeordnet ist, welche eingerichtet ist, um das Schließelement (3) bei einem Rückstellvorgang des Gasinjektors vom geöffneten in den geschlossenen Zustand abzubremsen.

9. Gasinjektor nach Anspruch 8, wobei die Bremseinrichtung (6) einen Bremsbolzen (60) und ein elastisches Bremselement (61) aufweist, wobei der Bremsbolzen (60) und das elastische Bremselement (61) beim Rückstellvorgang in Wirkverbindung mit dem mit dem Schließelement (3) und/oder dem Anker (20) bringbar ist.

10. Gasinjektor nach Anspruch 9, wobei der Bremsbolzen (60) in einem Bremsführungselement (62) im Schmiermittelraum (4) geführt ist.

11. Gasinjektor nach Anspruch 10, wobei im geschlossenen Zustand des Injektors ein erster Axialspalt (B) zwischen dem Bremsführungselement (62) und dem Bremsbolzen (60) kleiner ist als ein zweiter Axialspalt (C) zwischen dem Anker (20) und dem Innenpol (21).

## Claims

1. Gas injector for injecting a gaseous fuel, comprising: - a magnetic actuator (2) having an armature (20), an internal pole (21) and a coil (22), - a closing element (3) which opens and closes a gas path (14) at a valve seat (90), wherein the armature (20) is connected to the closing element (3), - a closed-off lubricant chamber (4) which is filled with a lubricant and in which the armature (20) is arranged, wherein the lubricant ensures lubrication of the armature (20), and - a first flexible sealing element (51) and a second flexible sealing element (52) which seal the lubricant chamber (4) with respect to the gas path (14), **characterized in that in that** the gas path (14) begins at a connection pipe (70) and is then diverted into an annular chamber (80) between a valve housing (8) and a main body (7) and continues past an outer region of the magnetic actuator (2) as far as the valve seat (90), with the result that the gas path (14) runs in each case radially on the outside with respect to the first flexible sealing element (51) and the second flexible sealing element (52).

2. Gas injector according to Claim 1, further comprising an accumulator spring (40) which exerts a predetermined force on the lubricant in the closed-off lubricant chamber (4) from the outside.

3. Gas injector according to either of the preceding claims, wherein the first flexible sealing element (51) is a first gaiter and wherein the second flexible sealing element (52) is a second gaiter.

4. Gas injector according to Claim 3, wherein the second gaiter is connected to the accumulator spring (40) via a plate (19).

5. Gas injector according to Claim 3 or 4, wherein the first gaiter has an identical mean diameter to the second gaiter and an identical number of gaiter corrugations.

6. Gas injector according to one of the preceding claims, furthermore comprising at least two guide regions (31, 32) for guiding the closing element (3), both of which are arranged in the lubricant chamber (4).

7. Gas injector according to one of Claims 3 to 6, wherein the accumulator spring (40) is arranged within the second flexible sealing element (52), and the lubricant chamber is situated outside the second flexible sealing element (52).

8. Gas injector according to one of the preceding claims, wherein a brake device (6) is arranged in the lubricant chamber (4), said brake device being configured to brake the closing element (3) during a resetting process of the gas injector from the open into the closed state.

9. Gas injector according to Claim 8, wherein the brake device (6) has a brake bolt (60) and an elastic brake element (61), wherein the brake bolt (60) and the elastic brake element (61) can be brought into operative connection with the with the closing element (3) and/or the armature (20) during the resetting process.

10. Gas injector according to Claim 9, wherein the brake bolt (60) is guided in a brake guide element (62) in the lubricant chamber (4).

11. Gas injector according to Claim 10, wherein a first axial gap (B) between the brake guide element (62) and the brake bolt (60) is smaller in the closed state of the injector than a second axial gap (C) between the armature (20) and the internal pole (21).

## Revendications

1. Injecteur de gaz pour injecter un combustible gazeux, comprenant : - un actionneur magnétique (2) comprenant un induit (20), un pôle intérieur (21) et une bobine (22), - un élément de fermeture (3) qui libère et ferme un passage de gaz (14) au niveau d'un siège de soupape (90), l'induit (20) étant relié à l'élément de fermeture (3), - une chambre de lubrifiant (4) fermée qui est remplie d'un lubrifiant et dans laquelle est agencé l'induit (20), le lubrifiant assurant une lubrification de l'induit (20), et - un premier élément d'étanchéité flexible (51) et un deuxième élément d'étanchéité flexible (52) qui rendent étanche la chambre de lubrifiant (4) par rapport au passage de gaz (14), **caractérisé en ce que** le passage de gaz (14) commence par un tube de raccordement (70) puis est dévié dans un espace annulaire (80) entre un boîtier de soupape (8) et un corps principal (7) et se poursuit en passant devant une zone extérieure de l'actionneur magnétique (2) jusque devant le siège de soupape (90), de sorte que le passage de gaz (14) s'étend respectivement radialement à l'extérieur par rapport au premier élément d'étanchéité flexible (51) et au deuxième élément d'étanchéité flexible (52).

2. Injecteur de gaz selon la revendication 1, comprenant en outre un ressort accumulateur (40) qui exerce depuis l'extérieur une force prédéterminée sur le lubrifiant dans la chambre de lubrifiant (4) fermée.

3. Injecteur de gaz selon l'une des revendications précédentes, dans lequel le premier élément d'étanchéité flexible (51) est un premier soufflet plissé et dans lequel le deuxième élément d'étanchéité flexible (52) est un deuxième soufflet plissé.

4. Injecteur de gaz selon la revendication 3, dans lequel le deuxième soufflet plissé est relié au ressort accumulateur (40) par l'intermédiaire d'une plaque (19).

5. Injecteur de gaz selon la revendication 3 ou la revendication 4, dans lequel le premier soufflet plissé a un même diamètre moyen que le deuxième soufflet plissé et comprend un même nombre de plis.

6. Injecteur de gaz selon l'une des revendications précédentes, comprenant en outre au moins deux zones de guidage (31, 32) pour guider l'élément de fermeture (3), qui sont toutes deux agencées dans la chambre de lubrifiant (4).

7. Injecteur de gaz selon l'une des revendications 3 à 6, dans lequel le ressort accumulateur (40) est agencé à l'intérieur du deuxième élément d'étanchéité flexible (52) et la chambre de lubrifiant se trouve à l'extérieur du deuxième élément d'étanchéité flexible (52).

8. Injecteur de gaz selon l'une des revendications précédentes, dans lequel un dispositif de freinage (6) est agencé dans la chambre de lubrifiant (4), lequel est conçu pour freiner l'élément de fermeture (3) lors d'un processus de rappel de l'injecteur de gaz de l'état ouvert à l'état fermé.

9. Injecteur de gaz selon la revendication 8, dans lequel le dispositif de freinage (6) comprend une pièce de freinage (60) et un élément de freinage élastique (61), la pièce de freinage (60) et l'élément de freinage élastique (61) étant aptes à être amenés en liaison fonctionnelle avec l'élément de fermeture (3) et/ou l'induit (20) lors du processus de rappel.

10. Injecteur de gaz selon la revendication 9, dans lequel la pièce de freinage (60) est guidée dans un élément (62) de guidage de freinage dans la chambre de lubrifiant (4).

11. Injecteur de gaz selon la revendication 10, dans lequel, à l'état fermé de l'injecteur, un premier interstice axial (B) entre l'élément (62) de guidage de freinage et la pièce de freinage (60) est plus petit qu'un deuxième interstice axial (C) entre l'induit (20) et le pôle intérieur (21).
